# EUROPÄISCHE PATENTANMELDUNG

(11) **EP 0 811 315 A2**
(43) Veröffentlichungstag der Anmeldung: **10.12.1997**
(21) Anmeldenummer: 97108980.0
(22) Anmeldetag: 04.06.1997
(51) Int. Cl.: A01G 3/053

(54) **Motorisch betriebenes Handgerät**

(30) Priorität: 05.06.1996 DE 19622594
(71) Anmelder: GARDENA Kress + Kastner GmbH, D-89079 Ulm (DE)
(72) Erfinder:
(74) Vertreter: Patentanwälte Ruff, Beier, Schöndorf und Mütschele

(57) **Zusammenfassung**

Am hinteren Griff (5) weist das Gerät (1) ein außen liegendes Auslöseorgan (34) für den Geräteantrieb auf, das im einspringenden Winkel zwischen der Außenseite (39) des zugehörigen Griffabschnittes (16) und der Rückseite (8) des Gerätegehäuses (3) als einwärts (Pfeil 44) zu betätigende Drucktaste in einer Vertiefung (48) liegt. Dadurch können Arbeiten mit ansonsten unbequemer Gerätehaltung, beispielsweise Überkopfhaltung, bequem ausgeführt werden.

## Beschreibung

Die Erfindung betrifft ein motorisch betriebenes Handgerät, beispielsweise eine Heckenschere, eine Kettensäge, eine Stichsäge o. dgl., bei welchem das Werkzeug langgestreckt oder schwertförmig über eine Gehäuseseite, wie die Vorderseite, um ein Maß vorsteht, das größer als die Gehäuselänge sein kann. Das Werkzeug arbeitet bzw. schneidet in einer Arbeitsebene, die rechtwinklig zu einer Mittelebene, beispielsweise der Längsmittelebene, des Gerätes und/oder parallel dazu bzw. in dieser Mittelebene liegen kann. Im Gehäuse, das den Antriebskopf bildet, ist ein Antrieb, beispielsweise ein Verbrennungsmotor, ein Elektromotor o. dgl. vorgesehen, welcher über ein Getriebe das langgestreckt frei vorstehende Werkzeug am hinteren Ende antreiben kann.

Um das Handgerät beim Arbeiten mit einer oder beiden Händen frei tragen sowie führen zu können, sind zweckmäßig ein oder zwei gesonderte Griffe vorgesehen, die jeweils mehrere quer aneinander schließende Griffabschnitte zum Umsetzen der zugehörigen Hand aufweisen können, um die Arbeitsebene in beliebige Ausrichtungen gegenüber dem Benutzer bringen zu können. Unbequeme Gerätehaltungen, wie sogenannte Überkopfarbeiten, bei welchen das Gerät mit nach oben gerichteten Armen über dem Kopf des Benutzers geführt wird, sind dabei ergonomisch besonders problematisch, insbesondere hinsichtlich des sicheren Festhaltens und Führens des Gerätes.

Um Verletzungen durch das laufende Werkzeug zu vermeiden, ist ein einziges oder sind mehrere Auslöseorgane, beispielsweise Drucktasten, vorgesehen, welche zum Start sowie zur Aufrechterhaltung des Werkzeuglaufes betätigt sowie betätigt gehalten werden müssen. Sobald ein Auslöseorgan vom Benutzer freigegeben wird, wird der Lauf des Werkzeuges bzw. des Antriebes sofort unterbrochen, weil das Auslöseorgan von selbst, beispielsweise durch Federkraft, in seine Ausgangs- bzw. Ausschaltlage zurückkehrt. Das Auslöseorgan ist zweckmäßig so angeordnet, daß es mit der den zugehörigen Griff haltenden Hand, beispielsweise mit den Innenseiten der den Griffabschnitt umgreifenden Finger zwanglos betätigt gehalten werden kann.

Der Erfindung liegt auch die Aufgabe zugrunde, ein Handgerät zu schaffen, bei welchem Nachteile bekannter Ausbildungen bzw. der beschriebenen Art vermieden sind und das insbesondere bei ergonomisch ungünstigem Gebrauch, wie Überkopfgebrauch, sicher in Betrieb zu halten ist.

Erfindungsgemäß ist als Auslöseorgan ein Auslöseelement bzw. Auslöseglied vorgesehen, das an einer von der Innenseite des Griffes gesonderten Auslöseseite liegt und insbesondere bei Umgreifen des zugehörigen Griffabschnittes mit dem Daumen bzw. der Daumenkuppe der umgreifenden Hand betätigbar ist. Zur Betätigung ist das Auslöseelement zweckmäßig lediglich nach innen zu drücken. Bevorzugt liegt das Auslöseelement im Bereich eines sich etwa in Längsrichtung des Werkzeuges bzw. etwa parallel zur Arbeitsebene erstreckenden Griffabschnittes, der gegenüber der Arbeitsebene oder dem Werkzeug quer versetzt und näher bei der Oberseite des Gehäuses als das Werkzeug liegen kann, welches seinerseits zweckmäßig unmittelbar benachbart zur davon abgekehrten Unterseite des Gehäuses angeordnet ist. Das Auslöseelement ist vorteilhaft quer zur Längsrichtung dieses Griffabschnittes in diesen hinein in einer Richtung betätigbar, die quer zur Längsrichtung des Werkzeuges bzw. zur Arbeitsebene liegt. Auslöseelemente können seitlich am Griff, nämlich an dessen quer an die Griff-Innenseite anschließenden Seitenflächen und/oder an der von der Innenseite abgekehrten Griff-Außenseite zugänglich oder angeordnet sein, so daß derselbe Griffabschnitt gleichermaßen gut mit der linken oder der rechten Hand umklammert und dabei die Auslösung betätigt werden kann.

Zweckmäßig weist der Griff auch an der Innenseite ein Auslöseorgan bzw. Auslöseelement auf, beispielsweise einen pistolenartigen Abzug. Beide Auslöseelemente haben die gleiche Funktion, so daß wahlweise nur eines betätigt werden muß, um das Gerät in Betrieb zu nehmen und zu halten. Das weitere Auslöseelement ist vorteilhaft an einem weiteren Griffabschnitt vorgesehen, welcher quer zu den genannten Längsrichtungen, quer zur Arbeitsebene und/oder hinter dem ersten Griffabschnitt liegt. Der weitere Griffabschnitt kann stumpfwinklig an das hintere Ende des ersten Griffabschnittes anschließen, sich von diesem gegen die Arbeitsebene bzw. Unterseite des Gehäuses erstrecken und mit Abstand von der hinteren Seite des Gehäuses bzw. derjenigen Gehäusewandung liegen, welche den Aufnahmeraum für den Antrieb begrenzt. Die Betätigungsrichtungen der beiden Auslöseelemente liegen dann quer zueinander, da diejenige des weiteren Auslöseelementes von der inneren Griffseite zur davon abgekehrten äußeren Griffseite gerichtet ist.

Der zweite Halte- bzw. Traggriff ist vorteilhaft im Abstand vor dem ersten Griff und/oder hinter dem Werkzeug bzw. der zugehörigen Außenseite des Gehäuses angeordnet und kann einen oder mehrere im Winkel aneinanderschließende Griffabschnitte aufweisen, die alle quer zu den genannten Längsrichtungen liegen können. Ein Griffabschnitt des Traggriffes liegt zweckmäßig quer zur Längsmittelebene des Haltegriffes und ein anderer Griffabschnitt etwa parallel zu dieser Ebene oder unter einem spitzen Winkel dazu. Dieser Griffabschnitt kann zu seinem äußeren Ende gegenüber einer der genannten Längsrichtungen nach vorne geneigt sein.

Auch für die den jeweiligen Griffabschnitt des Traggriffes umklammernde Hand ist zweckmäßig ein Auslöseorgan der genannten Art, nämlich ein Auslöseglied vorgesehen, welches in der beschriebenen Weise arbeitet. Nur wenn mit jeder Hand eines der zugehörigen Auslöseorgane betätigt gehalten wird, wird der Lauf des Werkzeuges bzw. des Antriebes nicht unterbrochen. Sind für jede Hand mehrere Auslöseorgane vorgesehen, so genügt jeweils die Betätigung eines einzigen. Um bei jeder Gerätehaltung bequem arbeiten zu können, ist für jeden Griffabschnitt des Traggriffes ein gesondertes Auslöseelement vorgesehen. Jedes Auslöseorgan des jeweiligen Griffes kann auf einen gesonderten elektrischen Schalter wirken, die parallel geschaltet sind, während die Schalter der beiden Griffe in Reihe geschaltet sind. Die Auslöseorgane des jeweiligen Griffes können aber auch auf einen gemeinsamen Schalter wirken und mit diesem über ein Übertragungsorgan, wie einen zweiarmigen Schwenkhebel, einen Seilzug o. dgl. verbunden sein. Eine solche Zugorgan-Führung ist der DE-OS 35 31 059 zu entnehmen, auf die wie auf die europäische Patentanmeldung 06 22 015 zur Einbeziehung ihrer Merkmale und Wirkungen in die vorliegende Erfindung bezug genommen wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:

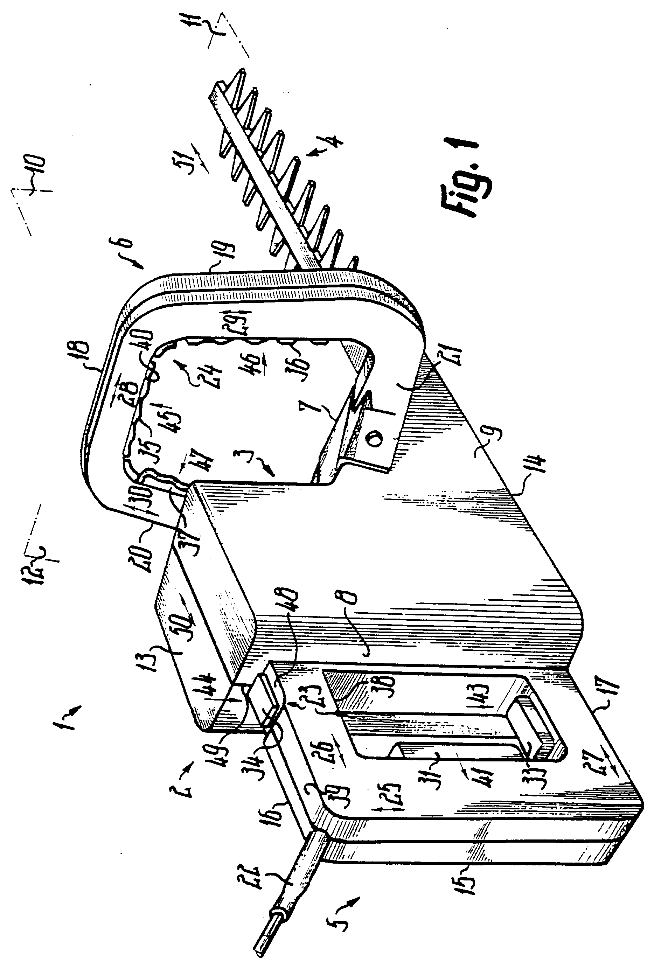

- Fig. 1: ein erfindungsgemäßes Handgerät als Heckenschere in vereinfachter perspektivischer Darstellung und
- Fig. 2: eine weitere Ausführungsform eines Handgerätes in Seitenansicht.

Das Gerät 1 weist einen Kopf 2 auf, der im wesentlichen durch ein Gehäuse 3 gebildet ist und ein frei vorstehendes Werkzeug 4, hier ein vielzahniges Schneidwerkzeug mit zwei gegeneinander scherend hin- und herbewegbaren Einzelwerkzeugen trägt, von denen eines mit dem im Gehäuse 3 angeordneten Antrieb oder Motor so gekuppelt ist, daß es in Längsrichtung des Werkzeuges bewegt wird. Das Gerät 1 weist zwei Führungsgriffe, nämlich einen Haltegriff 5 und einen Traggriff 6 auf. Der Griff 5 bildet das hintere Ende des Kopfes 2 und steht als rahmenförmig geschlossener Bügel über die hinterste Außenseite 8 des Gehäuses 3 vor, die seitlich beiderseits über die Seitenflächen des Griffes 5 vorsteht. Mit Abstand davor ist der ebenfalls als geschlossener Rahmen bzw. Bügel ausgebildete Griff 6 angeordnet, der näher bei der vordersten Außenseite 7 des Gehäuses 3 als der Griff 5 liegt und über beide seitlich äußersten Seiten 9 des Gehäuses 3 vorsteht. Der Griff 6 kann gegenüber der Vorderseite 7 bzw. dem hinteren Ende des Werkzeuges 4 zurückversetzt sein, das aus der Vorderseite 7 herausragt.

Die Einheiten 1 bis 6 sind jeweils symetrisch zu parallelen Ebenen oder einer gemeinsamen Längs-Mittelebene 10 ausgebildet, die hier rechtwinklig zur Arbeitsebene 11 des Werkzeuges 4 liegt. Die Mittelebene des Griffes 9 liegt in der Mittelebene 10 und die Mittelebene 12 des Griffes 6 rechtwinklig quer zur Ebene 10, jedoch unter einem spitzen Winkel von weniger als 45° nach vorne geneigt. Das Werkzeug 4 und die Arbeitsebene 11 liegen näher bei der untersten Außenseite 14 der Einheiten 2, 3, 5, 6 als bei deren obersten Außenseite bzw. der Oberseite 13 des Gehäuses 3 und können unmittelbar benachbart zur Unterseite 14 liegen. Diese Unterseite 14 bildet die unterste Außenseite des Gerätes 1 und eine im wesentlichen ebene, rechtwinklige Standfläche zum sicheren Abstellen des Gerätes 1 auf einer Tragfläche.

Der Griff 5 bildet drei gesonderte, im Winkel zueinander liegende Griff-Abschnitte 15 bis 17, die seine Rahmenschenkel bilden und einteilig mit dem Gehäuse 3 ausgebildet sein können. Zweckmäßig bestehen das Gehäuse 3 und der Griff 5 aus zwei jeweils einteiligen Schalenkörpern, die in der Mittelebene 10 gefügt sind und zwischen sich sämtliche Bau- und Funktionsteile des Antriebes sowie der Gerätesteuerung aufnehmen. Jeweils eine Schalenhälfte des Gehäuses 3 ist einteilig mit einer Schalenhälfte des Griffes 5 ausgebildet und bildet eine von deren Seitenflächen, wie die Fläche 9. Das langgestreckte Gerät 1 bestimmt eine Längsrichtung 50, die parallel zur Längsrichtung 51 des Werkzeuges 4 bzw. zu den Ebenen 10, 11 liegt. Die Ebene 12 liegt quer zu den Richtungen 50, 51.

Der am nächsten bei der Oberseite 13 liegende Griff-Abschnitt 16 liegt parallel zu den Richtungen 50, 51 sowie den Ebenen 10, 11 und schließt mit seinem vorderen Ende unmittelbar an die Rückseite 8 an. An das hintere Ende des Abschnittes 16 schließt im rechten Winkel quer das obere Ende des Abschnittes 15 an, der im Abstand hinter der Rückseite 8 und zu dieser parallel liegt. An das untere Ende des Abschnittes 15 schließt im rechten Winkel quer das hintere Ende des Abschnittes 17 an, dessen vorderes Ende wie das des Abschnittes 16 an die Rückseite 8 anschließt. Alle Abschnitte 15 bis 17 liegen in einer gemeinsamen Ebene 10 und sind jeweils so groß, daß jeder Abschnitt für sich mit einer Hand umklammert werden kann. Die untere Außenseite des Abschnittes 17 schließt kontinuierlich an die Unterseite 14 an und bildet einen Teil der Standfläche.

Der Griff 6 ist durch eine gesonderte, am Gehäuse 3 befestigte Baueinheit gebildet und weist wie der Griff 5 drei im Winkel aneinanderschließende Abschnitte 18 bis 20 auf, so daß auch er gemeinsam mit dem Gehäuse 3 einen geschlossenen Rahmen oder Bügel bildet, welcher mit seinen Rahmen- bzw. Griffabschnitten eine Bügelöffnung über den Umfang durchgehend begrenzt. Der am nächsten bei der Oberseite 13 liegende und über deren zur Unterseite 14 parallele Ebene geringfügig vorstehende Abschnitt 18 liegt rechtwinklig quer zu den Richtungen 50, 51 bzw. zur Ebene 10 und parallel zur Ebene 11, 12 mit geringem Abstand vor demjenigen Bereich der Vorderseite 7, der ihm gegenüberliegt. Dieser Bereich ist gegenüber demjenigen Bereich zurückversetzt, aus welchem das Werkzeug 4 ragt. Die Abschnitte 19, 20 schließen im stumpfen Winkel quer an die Enden des Abschnittes 18 an und erstrecken sich von diesen nach unten in Richtung zum Werkzeug 4 bzw. zur Ebene 11, wobei sie spitzwinklig divergieren, so daß die Abschnitte 18 bis 20 eine abgerundete Trapezform bilden.

An die vom Abschnitt 18 entfernten Enden der Abschnitte 19, 20 schließt jeweils im spitzen Winkel quer einwärts gerichtet ein kurzer Schenkel 21 an, mit dessen freiem Ende der Griff 6 an der zugehörigen Seite 9 des Gehäuses 3 starr, jedoch zerstörungsfrei lösbar, befestigt ist. Der Griff 6 kann ebenfalls aus zwei Schalen zusammengesetzt sein, die in der Ebene 12 gefügt sind und die zugehörigen Steuerelemente zwischen sich aufnehmen. Im Übergangsbereich zwischen zwei Griffabschnitten 15, 16 ragt aus der Außenseite des Griffes 5 eine Versorgungsleitung bzw. ein Netz-Anschlußkabel 22 heraus, das zwischen die Schaltenhälften in der Ebene 10 eingesetzt ist.

Zur Steuerung des Gerätes 1 bzw. des Antriebes und des Werkzeuges 4 weist der Griff 5 eine Auslöse-Einheit 23 und der Griff 6 eine Auslöse-Einheit 24 auf. Jede Einheit 23, 24 enthält mehrere, gesonderte sowie gesondert betätigbare Auslöseorgane, die jeweils rechtwinklig quer zum zugehörigen Griffabschnitt bzw. der zugehörigen Abschnittseite zu betätigen sind. Zur Inbetriebnahme sowie Inbetriebhaltung des Antriebes bzw. Werkzeuges 4 muß ein einziges Auslöseorgan jedes Griffes 5, 6 manuell betätigt sowie betätigt gehalten werden. Die Griffabschnitte 15 bis 17 erstrecken sich jeweils in der zugehörigen Längsrichtung 25 bis 27 und die Griffabschnitte 18 bis 20 jeweils in der zugehörigen Längsrichtung 28 bis 30. Die Längsrichtungen 26, 27 der Abschnitte 16, 17 liegen parallel zu den Richtungen 50, 51, während die Längsrichtung 25 des Abschnittes 15 rechtwinklig quer dazu sowie etwa parallel zu den Längsrichtungen 29, 30 der Abschnitte 19, 20 liegt. Die Längsrichtung 28 des Abschnittes 18 liegt quer zu den Richtungen 25 bis 27, 29, 30, 50, 51.

Jeder Abschnitt 15 bis 17 bildet eine an die Bügelöffnung angrenzende innerste Griffseite 38, an welcher beim Umgreifen außer dem Daumen die Innenseiten aller übrigen Finger der Hand anliegen. Dies gilt auch für die innersten Griffseiten 40 der Abschnitte 18 bis 20. Die Innenseiten 38 sind von der äußersten Seite 39 des jeweils zugehörigen Abschnittes 15 bis 17 abgekehrt und liegen wie diese quer zu den voneinander abgekehrten seitlichen Außenflächen des Griffes 5 bzw. der Abschnitte 15 bis 17. An der Innenseite 38 jedes Abschnittes 15, 17 ist als Auslöseorgan ein Auslöseelement 31, 33 angeordnet, das zur Betätigung in diese Innenseite hineinzudrücken ist.

An der Außenseite 39 des Abschnittes 16 ist ein weiteres Auslöseelement 34 vorgesehen, das zur Betätigung in diese Außenseite 39 hineinzudrücken ist. Das Element 34 liegt unmittelbar benachbart zur Rückseite 8 am vorderen Ende des Abschnittes 16 im Bereich einer Fläche 48, die gegenüber dieser Außenseite 39 so vertieft ist, daß die Finger-Druckfläche des Elementes 34 in der Ebene der Außenseite 39 oder demgegenüber geringfügig vertieft liegen kann. Unmittelbar hinter dem Element 34 steigt die Vertiefung 48 zur Fläche 39 an und unmittelbar davor steht die Rückseite 8 nach oben über das Element 34 vor. Dadurch sind unmittelbar vor und hinter dem Element 34 Anschläge 49 für den Daumen gebildet, so daß allein durch Tasten das Element 34 auch dann leicht mit dem Daumen gefunden werden kann, wenn es außerhalb des Sichtbereiches des Benutzers ist. Die Vertiefung 48 geht über die gesamte Breite des Abschnittes 5, 16 durch. Bei Betätigung ist das Element 34 vollständig in der Fläche 48 versenkt. Die Betätigung jedes der Elemente 31, 33, 34 hat die gleiche Wirkung, unabhängig davon, ob eines oder mehrere dieser Auslöseelemente betätigt werden. Die Elemente 31, 33, 34 wirken auf einen gemeinsamen Schalter.

Dies gilt auch für die Auslöseglieder 35 bis 37, die an den Innenseiten 40 der Abschnitte 18 bis 20 angeordnet bzw. zugänglich sind und zur Betätigung in diese Innenseite hineinzudrücken sind. Die Innenseiten der Abschnitte 19, 20 sind einander zugekehrt und die Innenseite des Abschnittes 18 liegt dem Werkzeug 4 gegenüber, wobei sie wie im Falle des Griffes 5 an die Innenseiten der Abschnitte 19, 20 anschließt. Die Glieder 35 bis 37 wirken auf einen gemeinsamen Schalter, der mit dem Schalter der Elemente 31, 33, 34, mit dem Motor und dem Anschlußkabel 22 in Serie geschaltet ist. Die Betätigungsrichtungen 41 bis 43 der Elemente 31 und 33 sind jeweils von der zugehörigen Seite 38 zur davon abgekehrten äußeren Seite 39, d.h. nach außen, gerichtet. Die Betätigungsrichtung 44 des Elementes 34 ist von der zugehörigen äußeren Seite 39 zur davon abgekehrten inneren Seite 38, d.h. nach innen bzw. entgegengesetzt gerichtet. Die beiden Elemente 33, 34 sind nach unten gerichtet zu betätigen, d.h. in jeweils gleicher Richtung. Gegenüber der Betätigungsrichtung 41 des Elementes 31 des Abschnittes 15 liegt die Richtung 44 quer bzw. rechtwinklig.

Die Auslöseglieder 35 bis 37 sind in den Richtungen 45 bis 47 zu betätigen, nämlich von der jeweiligen inneren Seite 40 zur äußeren Seite des zugehörigen Abschnittes 18 bis 20, d.h. nach außen gerichtet parallel zur Ebene 12. Die Elemente 31, 33, 34 und auch das Glied 35 sind parallel zur Ebene 10 zu betätigen. Die Betätigungsrichtung 45 liegt somit quer bzw. in einem von 90° abweichenden Winkel zu den Richtungen 46, 47 der Glieder 36, 37. Alle Richtungen 45 bis 46 weichen von allen Richtungen 41, 43, 44 ab. Die Richtungen 46, 47 liegen jeweils unter einem von 90° abweichendem Winkel zu allen Richtungen 41, 43, 44. Die Richtung 45 ist der Richtung 44 entgegengesetzt und die Richtungen 46, 47 liegen etwa parallel zu den Druckflächen der Elemente 31, 33, 34 sowie wie die Richtung 45 quer zu den Richtungen 50, 51 und zur Ebene 10. Jedes Auslöseelement 31, 33, 34 ist symmetrisch zur Ebene 10 und jedes Auslöseglied 35 bis 37 symmetrisch zur Ebene 12 angeordnet. Unabhängig davon, wie das Gerät zum Arbeiten in Bezug auf den Körper des Benutzers zu halten ist, ist dadurch eine bequeme Betätigung der Einheiten 23, 24 sowie ein sicherer Halt des Gerätes gewährleistet.

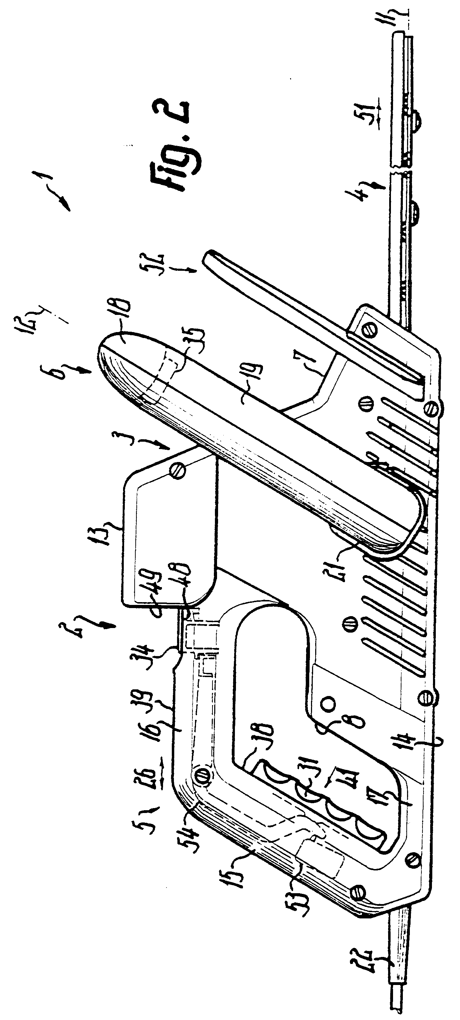

Gemäß Fig. 2 liegen die Abschnitte 15, 16 unter einem stumpfen Winkel zueinander und der entsprechend geneigten Innenseite des Abschnittes 15 sowie dem Element 31 liegt ein etwa paralleler Abschnitt der Rückseite 8 gegenüber. Die Rahmenöffnung des Griffes 5 ist hier stumpfwinklig winkelförmig, wobei ein Winkelschenkel vom Abschnitt 15 und der von diesem nach vorne gerichtete Winkelschenkel vom Abschnitt 16 sowie einer vertieft gegenüberliegenden Oberseite des Gehäuses 3 begrenzt ist. Dadurch kann in jeden Öffnungsschenkel mit der Hand besonders bequem eingegriffen werden. Der Abschnitt 16 ist hier an der Innenseite nicht mit einem Auslöseelement versehen, sondern ein solches Element 31 ist nur an der Innenseite 38 des Abschnittes 15 vorgesehen. Die beiden Abschnitte 15, 16 sind etwa gleich lang und demgegenüber ist der Abschnitt 17 wesentlich kürzer, so daß er hier nicht als Griffabschnitt vorgesehen ist. Die Leitung 22 ragt aus dem Übergang zwischen den Abschnitten 15, 17 parallel zu den Ebenen 10, 11 und zur Richtung 50, 51 heraus. Mit den Elementen 31, 34 ist ein innerhalb des Griffes 5, 15 angeordneter Schalter bzw. Kontakt 53 zu betätigen, dessen Betätigungsrichtung parallel zur Richtung 41 schräg nach hinten und oben gerichtet liegt, so daß sein Betätigungsstößel vom Element 31 in gleicher Richtung 41 mitgenommen werden kann. Das Element 34 betätigt den Schalter 53 über ein Übertragungsglied 54, beispielsweise einen zweiarmigen Schwenkhebel, dessen einer Arm im Abschnitt 16 bewegbar in Eingriff mit dem Element 34 und dessen anderer Arm im Abschnitt 15 bewegbar in Eingriff mit dem Betätigungsstößel des Schalters 53 steht. Das Element 31 wirkt über diesen Arm auf den Betätigungsstößel, da das Ende dieses Armes zwischen dem Element 31 und dem Stößel als Druckkörper angeordnet ist. Der Abschnitt 15 liegt etwa parallel zum Griff 6, so daß die Richtung 41 rechtwinklig quer zur Ebene 12 nach hinten gerichtet ist.

Vor den Griffen 5, 6 und nahe benachbart vor dem Griff 6 ist hinter dem Werkzeug 4 sowie darüber ein Schutzglied 52 vorgesehen, welches beim Abrutschen einer Hand vom Griff 5 bzw. 6 verhindern soll, daß diese Hand in das Werkzeug 4 gerät. Das zur Ebene 12 parallele Schild 52 steht über den zugehörigen Bereich der Ober- bzw. Vorderseite 7 vor, liegt geringfügig hinter demjenigen Abschnitt der Vorderseite 7, aus welchem das Werkzeug 4 herausragt und steht auch seitlich über die Seitenflächen 9 vor.

Alle angegebenen Eigenschaften und Wirkungen können genau wie beschrieben, nur etwa bzw. im wesentlichen wie beschrieben sowie stark davon abweichend vorgesehen sein.

## Patentansprüche

1. Motorisch betriebenes Handgerät, insbesondere Heckenschere, Kettensäge od. dgl., mit einem Gehäuse (3) zur Unterbringung eines Antriebes bzw. zur Anordnung eines Werkzeuges (4) an einer ersten Gehäuseseite (7), dadurch gekennzeichnet, daß ein sich in einer Längsrichtung (26, 27, 50, 51) erstreckender Griffabschnitt (16) eines eine Griff-Innenseite (38) bildenden Haltegriffes (5) und/oder mindestens ein durch den Benutzer betätigbares Betriebs-Auslöseelement (31 bis 34) zum Auslösen des Starts des Antriebes vorgesehen sind, daß inbesondere mit der den Haltegriff (5) haltenden Hand manuell betätigbar und vorzugsweise an einer von der Griff-Innenseite (38) gesonderten Auslöseseite (39) zugänglich ist.

2. Handgerät nach Anspruch 1, dadurch gekennzeichnet, daß ein Auslöseelement (34) an einem Haltegriff (5) angeordnet ist, daß insbesondere das Auslöseelement (34) an einer Griff-Außenseite (39) zugänglich ist und daß vorzugsweise das Auslöseelement (34) mit dem Daumen der den zugehörigen Griffabschnitt (16) haltenden Hand betätigbar ist, und/oder daS zwei Auslöseelemnte (31, 33, 34) gleicher Steuerfunktion vorgesehen sind, die für die Steuerfunktion unabhängig voneinander bzw. wahlweise betätigbar sind, wobei ein Auslöseelemnt (34) an einer von einer Griff-Innenseite gesonderten Auslöseseite (39) und mindestens ein Auslöseelement (31, 33) an einer von dieser Auslöseseite gesonderten Griff-Flanke angeordnet bzw. zugänglich sind.

3. Handgerät nach Anspruch 1 oder 2, dadurch gekennzeichnet, daß sich ein Griffabschnitt (16) in Längsrichtung (50) des Gerätes (1) erstreckt, daß insbesondere ein Haltegriff (5) im hinteren Bereich des Gerätes (1) angeordnet ist und daS vorzugsweise das vordere Ende des Griffabschnittes (16) an die Rückseite (8) und/oder die Oberseite (13) des Gehäuses (3) anschließt.

4. Handgerät nach einem der vorhergehenden Ansprüche, dadurch gekennzeichnet, daß an einen ersten Griffabschnitt (16) mindestens ein zweiter Griffabschnitt (15, 17) quer anschließt, daß insbesondere der zweite Griffabschnitt (15) an das hintere Ende des ersten Griffabschnittes (16) nach unten anschließt und daß vorzugsweise die Griffabschnitte (15 bis 17) durch Rahmenabschnitte eines Bügels, wie eines über den Umfang im wesentlichen geschlossenen Bügels, gebildet sind.

5. Handgerät nach einem der vorhergehenden Ansprüche, dadurch gekennzeichnet, daß auf der einem vorderen Griffende zugekehrten Seite eines Auslöseelementes (34) ein über dieses vorstehender Fingeranschlag (49) vorgesehen ist, daß insbesondere der Fingeranschlag (49) durch einen Schenkel einer einspringenden Winkelbegrenzung gebildet ist, an deren anderen Winkelschenkel das Auslöseelement (34) liegt und daß vorzugsweise die an den Haltegriff (5) anschließende Außenseite (8) des Gehäuses (3) den Fingeranschlag (49) bildet.

6. Handgerät nach einem der vorhergehenden Ansprüche, dadurch gekennzeichnet, daß ein Auslöseelement (34) in einer Vertiefung (48) einer Auslöseseite (39) angeordnet ist, daß insbesondere die Vertiefung (48) über die Breite der Auslöseseite (39) durchgeht und daß vorzugsweise der Boden der Vertiefung (48) unmittelbar an die Außenseite (8) des Gehäuses (3) anschließt, und/oder daß mindestens ein weiteres Auslöseelement (31, 33) an einer von einer Auslöseseite (39) gesonderten Griffseite (38) zugänglich ist, daß insbesondere das weitere Auslöseelement (31, 33) an einer Innenseite (38) eines Haltegriffes (5) angeordnet ist und daß vorzugsweise das weitere Auslöseelement (31, 33) an dem weiteren Griffabschnitt (15, 17) vorgesehen ist.

7. Handgerät nach einem der vorhergehenden Ansprüche, dadurch gekennzeichnet, daß ein weiteres Auslöseelement (31, 33) gleiche Auslösefunktion wie das Auslöseelement (34) hat, daß insbesondere beide Auslöseelemente (31, 33; 34) einen gemeinsamen Schalter (53) betätigen und daß vorzugsweise mindestens ein Auslöseelement (34) über einen gegenüber ihm bewegbaren Übertragungsteil (54), wie einen Schwenkhebel, auf den Schalter (53) wirkt.

8. Handgerät nach einem der vorhergehenden Ansprüche, dadurch gekennzeichnet, daß mindestens zwei Auslöseelemente (31, 33, 34) eines Haltegriffes (5) voneinander abweichende Betätigungsrichtungen (41, 43, 44) aufweisen, daß insbesondere die Betätigungsrichtungen (41, 43, 44) im Winkel zueinander liegen und daß vorzugsweise die Betätigungsrichtung (44) eines Auslöseelementes (34) zu einer Griff-Innenseite (38) sowie die Betätigungsrichtung (41, 43) eines weiteren Auslöseelementes (31, 33) zu einer Griff-Außenseite (39) gerichtet ist.

9. Handgerät nach einem der vorhergehenden Ansprüche, dadurch gekennzeichnet, daß gesondert von einem Haltegriff (5) ein Traggriff (6) für die zweite Hand des Benutzers vorgesehen ist, daß insbesondere der Traggriff (6) vor dem Haltegriff (5) angeordnet ist und daß vorzugsweise der Traggriff (6) ein Gehäuse (3) wenigstens teilweise bügelförmig umgibt.

10. Handgerät nach einem der vorhergehenden Ansprüche, dadurch gekennzeichnet, daß gesondert von einem Auslöseelement (31, 33, 34) mindestens ein durch den Benutzer betätigbares Betriebs-Auslöseglied (35 bis 37) vorgesehen ist, das zum Auslösen des Starts des Antriebes gemeinsam mit dem Auslöseelement (31, 33, 34) zu betätigen ist, daß insbesondere das Auslöseglied (35 bis 37) mit der einen Haltegriff (5) haltenden Hand nicht erreichbar sowie mit der den Haltegriff (5) nicht haltenden Hand des Benutzers betätigt zu halten ist und daß vorzugsweise das Auslöseglied (35 bis 37) im Abstand vor dem Haltegriff (5) liegt.

11. Handgerät nach einem der vorhergehenden Ansprüche, dadurch gekennzeichnet, daß an einem Traggriff (6) ein Auslöseglied (35 bis 37) vorgesehen ist, daß insbesondere das Auslöseglied (35 bis 37) an einer Innenseite (40) des Traggriffes (6) zugänglich ist und daß vorzugsweise mehrere Auslöseglieder (35 bis 37) an im Winkel zueinander liegenden Tragabschnitten (18 bis 20) des Traggriffes (6) vorgesehen sind, und/oder daß ein Haltegriff (5) in einer zur Längsrichtung (50) des Gerätes (1) etwa parallelen Ebene (10) liegt, daß insbesondere der Haltegriff (5) in einer zur Arbeitsebene (11) eines Werkzeuges (4) annähernd rechtwinkligen Ebene liegt und daß vorzugsweise der Haltegriff (5) das vom Werkzeug (4) abgekehrte Ende des Gerätes (1) bildet.

12. Handgerät nach einem der vorhergehenden Ansprüche, dadurch gekennzeichnet, daß ein Traggriff (6) in einer zum Haltegriff (5) querstehenden Ebene (12) liegt, daß insbesondere der Traggriff (6) etwa parallel zum zweiten Griffabschnitt (15) gegenüber der Längsrichtung (50) des Gerätes (1) nach vorne geneigt ist und daß vorzugsweise der Traggriff (6) mit drei quer aneinanderschließenden Tragabschnitten (18 bis 20) hinter dem freiliegenden hinteren Ende des Werkzeuges (4) und/oder wie der Haltegriff (5) annähernd symmetrisch zur Längsmittelebene (10) des Gerätes (1) liegt.
